# EUROPÄISCHE PATENTSCHRIFT

(11) **EP 1 253 989 B1**
(45) Veröffentlichungstag und Bekanntmachung des Hinweises auf die Patenterteilung: **29.10.2003**
(21) Anmeldenummer: 01923564.7
(22) Anmeldetag: 09.02.2001
(51) Int. Cl.: B23C 5/22, B23C 3/08

(54) **SCHNEIDEINSATZ UND ZUGEHÖRIGES FRÄSWERKZEUG**
CUTTING INSERT AND CORRESPONDING MILLING CUTTER
PIECE DE COUPE RAPPORTEE ET OUTIL DE FRAISAGE CORRESPONDANT

(30) Priorität: 12.02.2000 DE 10006381
(43) Veröffentlichungstag der Anmeldung: 06.11.2002
(73) Patentinhaber: Sandvik AB, 811 81 Sandviken (SE)
(72) Erfinder: WERMEISTER, Günter, 40667 Meerbusch (DE)
(74) Vertreter: Weber, Dieter, Dr.
(86) Internationale Anmeldenummer: EP0101414
(87) Internationale Veröffentlichungsnummer: WO01058633

(56) Entgegenhaltungen:
- DE-A- 2 234 854
- DE-A- 2 805 670
- DE-A- 19 743 971
- GB-A- 2 057 940
- US-A- 3 701 187
- US-A- 4 182 587

## Beschreibung

Die vorliegende Erfindung betrifft einen Schneideinsatz für die spanende Metallbearbeitung und Einbau an einem Scheibenfräser insbesondere zum Fräsen von Nockenwellen, mit mindestens einer Schneidkante, die durch den Schnitt einer Spanfläche mit einer Freifläche gebildet wird. Ebenso betrifft die vorliegende Erfindung ein Fräswerkzeug zur spanenden Bearbeitung eines metallischen Werkstückes, gemäß dem Oberbegriff des Patentanspruchs 13.

Entsprechende Schneideinsätze und ein entsprechendes Fräswerkzeug sind zum Beispiel aus DE-A-19743971, bzw. aus der US-4,867,616 bekannt. Bei dem bekannten Fräswerkzeug sind die Schneideinsätze näherungsweise von quadratischer Grundform mit unterbrochenen und in den Eckbereichen abgeschrägten Schneidkanten. Entlang des Umfangs eines zylindrischen bzw. scheibenförmigen Werkzeugkörpers sind die einzelnen Platten, wechselseitig axial leicht versetzt, verteilt, so daß insgesamt zwei verschiedene Gruppen von Schneideinsätzen derart angeordnet sind, daß die eine Gruppe von Schneideinsätzen in der einen axialen Richtung und die andere Gruppe von Schneideinsätzen in der anderen axialen Richtung über die Dicke des scheibenförmigen Werkzeugkörpers hervorsteht. Auch in radialer Richtung ragen alle Schneideinsätze geringfügig über den Radius des Werkzeugkörpers hinaus, und sie sind in entsprechenden Aussparungen bzw. Aufnahmetaschen des Werkzeuggrundkörpers aufgenommen. Die aktiven Schneidkanten sind dabei nicht exakt parallel zur Achse des Werkzeugkörpers ausgerichtet, sondern geringfügig gegen die Achse geneigt, d.h. in einer Ebene leicht verkippt, die durch den zugehörigen Radiusvektor und die Achse des Werkzeugkörpers aufgespannt ist.

Durch das Versetzen der beiden Schneideinsatzgruppen gegeneinander wird erreicht, daß die Schneidkantenabschnitte der einen Gruppe von Schneideinsätzen im wesentlichen in den Lücken von Unterbrechungen schneiden, die durch die unterbrochenen Schneidkanten der anderen Gruppe von Schneideinsätzen gebildet werden. Auf diese Weise erreicht man, daß auch bei größerer Überlappung beider Schneideinsatzgruppen in axialer Richtung dennoch die Schneideinsätze entlang ihrer gesamten (wenn auch unterbrochenen) Schneidkanten im wesentlichen gleichmäßig beansprucht werden.

Die Schneideinsätze sind wendbar und weisen bis zu acht (unterbrochene) Schneidkanten auf. Mit entsprechenden Fräswerkzeugen können zum Beispiel Schlitze oder Nuten in Werkstücke eingeschnitten werden. Zur Herstellung von Nockenwellen ist ein entsprechende Fräswerkzeug nur bedingt geeignet und würde auf jeden Fall mehrere aufeinander folgende Arbeitsgänge erfordern, um das richtige Profil von Nocken zu erzeugen.

In der jüngeren Vergangenheit hat sich die Qualität der Schneideinsätze bzw. des Materials, aus denen diese hergestellt sind, zunehmend verbessert, so daß dementsprechend auch weiter zunehmende Bearbeitungsgeschwindigkeiten möglich geworden sind, ohne daß die Gefahr besteht, daß die Schneideinsätze beschädigt werden oder zu schnell verschleißen. Mit diesen höheren Bearbeitungsgeschwindigkeiten ist allerdings auch der Nachteil einer erhöhten Geräuschentwicklung verbunden. Bei nahezu allen Fräswerkzeugen und nahezu allen Fräsvorgängen sind die Schneidkanten bzw. ist zumindest ein Teil der Schneidkanten nicht permanent mit dem gerade in Bearbeitung befindlichen Werkstück in Eingriff, sondern vielmehr treten die Schneidkanten intermittierend mit dem Werkstück in Eingriff und wieder außer Eingriff, wobei die Eingriffsposition sich nur über einen bestimmten Winkelbereich des entsprechenden rotierenden Fräswerkzeuges erstreckt. Nach einer von der Art der Bearbeitung und der Tiefe des Eingriffs abhängenden Drehung um einen bestimmten Winkel, treten die zuvor aktiven Schneidkanten eines Schneideinsatzes zunächst außer Eingriff mit dem Werkstück, bis sie nach einer Drehung um einen weiteren Winkel, der in Summe mit dem erstgenannten Winkel zumeist 360° ergibt, wieder mit dem Werkstück in Eingriff kommen, wobei der entsprechende Vorgang erneut beginnt. Dies gilt für jeden einzelnen Schneideinsatz, der entlang des Umfanges eines entsprechenden Fräswerkzeuges angeordnet ist, wobei sich während einer Werkstückbearbeitung jeweils ein Teil der über den Umfang verteilten Schneideinsätze mit dem Werkstück in Eingriff befindet und ein Teil gerade außer Eingriff steht.

Der Eingriff einer aktiven Schneidkante mit dem Werkstück erfolgt nach einer entsprechenden Drehung des Werkzeugkörpers im allgemeinen schlagartig, indem die jeweils aktive, im wesentlichen achsparallele Schneidkante über ihre gesamte Länge hinweg gleichzeitig mit dem Werkstück in Eingriff tritt und einen Span bzw. mehrere Späne während der weiteren Drehung in dem Werkslückmaterial aus diesem herauslöst. Der Moment des in Eingrifttretens verursacht durch das Anschlagen der Schneidkanten an dem Werkstück bzw. der zu bearbeitenden Fläche ein deutlich hörbares Geräusch und die Vielzahl der während einer Rotation eines Fräswerkzeuges schnell nacheinander mit der Werkstückoberfläche in Eingriff tretenden Schneidkanten der einzelnen Schneideinsätze erzeugen bei einem schnell rotierenden Fräswerkzeug einen beträchtlichen Lärm.

Arbeitsschutzvorschriften sehen dabei vor, daß durch entsprechende Werkzeuge ein Lärmpegel von 80 Dezibel nicht überschritten werden darf, wobei der Lärmpegel in genau definierten Abständen zu dem Werkstück und dem Fräswerkzeug gemessen wird. Mit zunehmender Bearbeitungsgeschwindigkeit, d.h. mit zunehmender Rotationsgeschwindigkeit der Werkzeugkörper bzw. mit einer Zunahme des Durchmessers der rotierenden Werkzeugkörper nimmt der entstehende Geräuschpegel weiter zu. Darüberhinaus wird von den zuständigen Behörden in Europa angestrebt, das maximal zulässige Geräuschniveau von 80 Dezibel weiter abzusenken auf 75 Dezibel. Dies bedeutet, daß die Bearbeitungsgeschwindigkeit und damit auch die Produktivität entsprechender Maschinen unter den Wert gesenkt werden müßte, der ansonsten technisch möglich wäre.

Gegenüber diesem Stand der Technik liegt der vorliegenden Erfindung die Aufgabe zugrunde, einen Schneideinsatz für ein Fräswerkzeug und ein entsprechendes Fräswerkzeug zu schaffen, bei deren Verwendung auch bei Ausnutzung der vollen Belastbarkeit eine erhebliche Absenkung des Geräuschniveaus beim Fräsen mit hoher Geschwindigkeit erzielt werden kann. Es versteht sich, daß dies auch dann gelten soll, wenn Schneideinsätze mit der höchsten verfügbaren Bruch- und Verschleißfestigkeit verwendet werden, die rein technisch maximale Bearbeitungsgeschwindigkeiten erlauben.

Hinsichtlich des Schneideinsatzes selbst wird die der Erfindung zugrundeliegende Aufgabe dadurch gelöst, daß die jeweils aktive Schneidkante unter einem von 90° abweichenden Winkel zur Schneidrichtung verläuft. Dies bedeutet konkret, daß bei einer entsprechenden, im allgemeinen rotatorischen Bewegung des Schneideinsatzes bzw. der Schneidkante um die Achse eines entsprechenden Werkzeuges die Schneidkante nicht gleichzeitig über ihre volle Länge hinweg mit dem Werkstück in Eingriff tritt, sondern zunächst aufgrund der Neigung der Schneidkante gegenüber der zur Schneidrichtung senkrecht verlaufenden Richtung, ein am weitesten voraus eilender Abschnitt der Schneidkante an einem Ende derselben mit dem Werkstück in Eingriff tritt und erst beim weiteren Drehen nacheinander die nachfolgenden Abschnitte der Schneidkante mit dem Werkstück in Eingriff kommen. Dadurch, daß nicht schlagartig die gesamte Schneidkante mit dem Werkstück in Eingriff tritt, wird das entsprechende Schlaggeräusch beträchtlich gedämpft, wobei allerdings vorausgesetzt werden muß, daß der Neigungswinkel zwischen der Schneidkante und einer Senkrechten zur Schneidrichtung eine gewisse Mindestgröße überschreiten muß, da ansonsten doch ein einheitlicher Schallimpuls erzeugt wird, der im wesentlichen von der gesamten Schneidkante herrührt. Als zweckmäßig haben sich Winkel zwischen 40 und 85° der Schneidkante zur Schneidrichtung erwiesen, insbesondere zwischen 50 und 75°, wobei Winkel um 60°, also im Bereich von 55 bis 65°, besonders bevorzugt sind.

Bevorzugt ist eine Ausführungsform der Erfindung, bei welcher die Freiflächen Strukturen aufweisen, die im wesentlichen in Schneidrichtung des Schneideinsatzes verlaufen, also mit einem von 90° deutlich verschiedenen Winkel an die Schneidkante angrenzen. Weiterhin ist eine Ausführungsform der Erfindung bevorzugt, bei welcher die Schneidkanten unterbrochen sind und jeweils aus mindestens zwei getrennten, aber im wesentlichen in derselben Richtung verlaufenden Schneidkantenabschnitten besteht, zwischen denen eine Lücke bzw. eine Unterbrechung vorgesehen ist. Die Freifläche hat dann einen entsprechend strukturierten Querschnitt, der, in Schneidrichtung gesehen, konstant bleibt. Beispielsweise können an den Enden der Schneidkanten Schneidecken bzw. Abfasungen vorgesehen sein, an die sich entsprechende Abfasungen bzw. Kanten der Freiflächen anschließen.

Der lichte Abstand zwischen den einzelnen Schneidkantenabschnitten eines Schneideinsatzes, die jeweils zusammen zur selben Schneidkante gehören, sollte in der bevorzugten Ausführungsform der Erfindung etwas kleiner sein als die Länge der einzelnen Schneidkantenabschnitte selbst. Auf diese Weise kann man verschiedene Schneideinsätze entsprechend versetzt hintereinander anordnen, so daß in dem Lückenbereich, den die Schneidkanten des vorangehenden Schneideinsatzes hinterlassen, eine Schneidkante des nächst folgenden Schneideinsatzes schneidet, während die vorangehenden Schneidkanten überwiegend in dem Bereich Material entfernen, in dem der jeweils nachfolgende Schneideinsatz eine Lücke bzw. Unterbrechung seiner Schneidkante aufweist. Zweckmäßigerweise liegt die Breite bzw. Länge dieser Schneidkantenunterbrechungen in der Größenordnung von 70 bis 90%, vorzugsweise um etwa 80% der Länge der einzelnen Schneidkantenabschnitte.

Wie bereits erwähnt, sollten die Enden der aktiven Schneidkanten der Schneideinsätze abgewinkelt sein, vorzugsweise um etwa 45°. An den äußeren Enden des Schneideinsatzes gehen diese abgewinkelten Enden über in Nebenschneidkanten, die im wesentlichen senkrecht zu den Hauptschneidkanten verlaufen, jedoch deutlich kürzer sind und sich im wesentlichen über die Dicke des Schneideinsatzes hinweg erstrecken.

Durch die vorstehend gegebenen Definitionen und Strukturen, insbesondere dadurch, daß die Freiflächen Strukturen und zum Beispiel Ränder aufweisen, die in Schneidrichtung verlaufen, wohingegen die Schneidrichtung wiederum nicht senkrecht zur Schneidkante verläuft, ergibt sich unter anderem auch das Merkmal, daß der erfindungsgemäße Schneideinsatz in Draufsicht auf die Freifläche die Form eines (nicht rechtwinkligen) Parallelogramms hat. Zwar sind rhombische Schneideinsätze im Prinzip im Stand der Technik bekannt, jedoch ergibt sich bei diesen bekannten Schneideinsätzen die rhombische bzw. Parallelogrammform nicht in der Draufsicht auf eine Freifläche, sondern vielmehr in der Draufsicht auf eine Spanfläche oder die entgegengesetzt liegende Stützfläche.

Vorzugsweise weisen die Schneideinsätze gemäß der vorliegenden Erfindung jeweils mehrere unabhängige Schneidkanten auf, so daß sie gewendet werden können. wenn eine der Schneidkanten verschlissen ist. So ist eine Ausführungsform der Erfindung besonders bevorzugt, bei welcher Schneidkanten an verschiedenen Spanflächen vorgesehen sind, die auf voneinander abgewandten Seiten des Schneideinsatzes angeordnet sind. Auch auf der selben Seite, d.h. im Prinzip an dieselbe Spanfläche angrenzend, können jeweils zwei Schneidkanten vorgesehen werden, die jeweils durch den Schnitt einer Spanfläche mit einer der beiden auf entgegengesetzten Seiten liegenden Freiflächen gebildet werden. Durch Kombination dieser Merkmale kann man Schneideinsätze mit zum Beispiel vier Schneidkanten erzeugen, wobei als "Schneidkante" immer der bei einem Schneidvorgang insgesamt aktive Teil bezeichnet wird, auch wenn er aus mehreren, durch Unterbrechungen getrennten Schneidkantenabschnitten besteht.

In einer besonders bevorzugten Ausführungsform der Erfindung verlaufen die Schneidkante bzw. die zu einer Schneidkante gehörenden Schneidkantenabschnitte gekrümmt, oder die verschiedenen Schneidkantenabschnitte verlaufen unter einem kleinen Winkel zueinander, wie dicht benachbarte Tangenten an einem entsprechenden Kreis. Ein solcher Kreisbogen entlang dessen die Schneidkanten verlaufen, sollte einen Krümmungsradius in der Größenordnung zwischen 100 und 1000 mm haben. Statt einer relativ schwierig herzustellenden, gekrümmt verlaufenden Schneidkante können jedoch auch zum Beispiel benachbarte Schneidkantenabschnitte je für sich gerade verlaufen, aber unter einem kleinen Winkel zueinander geneigt sein, der typischerweise zwischen 1° und 10°, vorzugsweise bei etwa 5° liegt. Allgemeiner kann man für gekrümmte Schneidkanten sagen, daß die jeweils voneinander entfernt liegenden Enden einer Schneidkante (also zum Beispiel die Tangenten an die Endabschnitte) einen entsprechenden Winkel zwischen 1° und 10° miteinander einschließen sollten.

Hinsichtlich des Fräswerkzeuges zur spanenden Bearbeitung eines Werkstückes wird die der Erfindung zugrundeliegende Aufgabe dadurch gelöst, daß mindestens ein Teil der Aufnahmetaschen des Werkzeugkörpers derart angeordnet bzw. ausgestaltet ist, daß die jeweils aktive Schneidkante des darin aufgenommenen, passenden Schneideinsatzes relativ zur Achse des Werkzeugkörpers in Umfangsrichtung desselben geneigt verläuft. Dies bedeutet, daß die Schneidkante nicht etwa in einer Ebene geneigt wird, die durch den zugehörigen Radius und die Achse des Werkzeugkörpers aufgespannt wird, sondern in einer Ebene senkrecht hierzu, d.h. in einer Ebene, die von einer Tangente an den Werkzeugkörper im Bereich des Schneideinsatzes und einer Parallelen zur Achse des Werkzeugkörpers aufgespannt wird. Zwar bedeutet dies, daß damit unvermeidlich auch der radiale Abstand von Teilen der Schneidkante gegenüber der Achse des Werkzeugkörpers geringfügig geändert wird, jedoch ist dieser Effekt vergleichsweise gering, wenn die Schneidkanten nicht übermäßig lang sind und der Neigungswinkel 30° nicht übersteigt. Im übrigen kann jedoch dieser Effekt auch vollständig dadurch ausgeglichen werden, daß die Schneidkanten eines Schneideinsatzes, wie oben bereits beschrieben, leicht zueinander abgewinkelt oder besser noch entlang eines Kreisbogens verlaufen, dessen genauer Radius durch den Radius des Werkzeugkörpers und durch die Neigung der Schneidkante relativ zur Achse des Werkzeugkörpers bestimmt wird.

Wie bereits erwähnt, sollte der Neigungswinkel zwischen 5 und 45°, besser zwischen 10 und 40° und besonders bevorzugt zwischen 25und 35° liegen, was bedeutet, daß die Aufnahmetaschen den Schneideinsätzen in der Weise angepaßt sind, daß der entsprechende Winkel der aktiven Schneidkanten mindestens eines Teiles der Schneideinsätze durch die Aufnahmetaschen an dem Werkzeugkörper vorgesehen wird. Vor allem die aktiven Hauptschneidkanten der Schneideinsätze an dem Werkzeuggrundkörper sollten auf diese Weise eingestellt sein, während die im allgemeinen deutlich kürzeren Nebenschneidkanten auch eine Orientierung in etwa parallel zur Achse des Werkzeugkörpers beibehalten können, da sie vergleichsweise wenig zur Geräuschentwicklung beitragen. Denkbar ist in bestimmten Anwendungsfällen jedoch eine Variante, bei der auch die Nebenschneidkanten gegenüber der Achse des Werkzeugkörpers in der beschriebenen Weise verkippt sind. Dabei können die Nebenschneidkanten von Schneideinsätzen, die auf gegenüberliegenden Seiten eines Werkzeugkörpers angeordnet sind, auch in entgegengesetzter Richtung gekippt sein. Aus Platzgründen werden jedoch die Aufnahmetaschen für die Schneideinsätze, die jeweils mit ihren Hauptschneidkanten aktiv sind, bevorzugt in der Weise vorgesehen, daß alle Schneidkanten dieser Schneideinsätze im wesentlichen in derselben Richtung relativ zur Achse des -Werkzeugkörpers geneigt sind.

Besonders zweckmäßig ist eine Ausgestaltung des Werkzeugkörpers, bei welcher ein Teil der Einsätze im Eckbereich zwischen dem Mantel bzw. Umfang des zylindrischen Werkzeugkörpers und den beiden Stirnflächen dieses Werkzeugkörpers angeordnet ist, während ein weiterer Teil der Schneideinsätze nur im Mantelbereich des zylindrischen Körpers angeordnet ist.

Dabei ist eine Ausgestaltung besonders bevorzugt, bei der insgesamt vier verschiedene Gruppen von Schneideinsätzen an dem Werkzeugkörper vorgesehen sind, die sich im wesentlichen durch unterschiedliche axiale Positionen der Schneideinsätze unterscheiden. Eine erste Gruppe von Schneideinsätzen ist dabei am Übergang einer Stirnfläche des zylindrischen Werkzeugkörpers zu der Mantelfläche in der Weise angeordnet, daß die Schneideinsätze im wesentlichen mit ihrer Nebenschneidkante in radialer Richtung über den Werkzeugkörper hinausragen. Eine weitere Gruppe von Schneideinsätzen ist in ganz ähnlicher Weise, jedoch möglicherweise in Umfangsrichtung versetzt an dem Übergang der anderen Stirnfläche zum Mantel des zylindrischen Werkzeugkörpers angeordnet. Die beiden verbleibenden Gruppen von Schneideinsätzen sind entlang der Mantelfläche des Werkzeugkörpers angeordnet und unterscheiden sich voneinander durch eine leicht versetzte axiale Position, wobei der axiale Versatz etwas geringer ist als die Länge eines Schneidkantenabschnittes. wobei die Schneideinsätze unterbrochene Schneidkanten haben und die Unterbrechung zwischen den Schneidkantenabschnitten etwas kleiner ist als die Länge eines der Schneidkantenabschnitte. Auf diese Weise schneiden Schneidkantenabschnitte der einen Gruppe gerade im Bereich der Lücke, die von den Schneidkantenabschnitten der anderen Gruppe hinterlassen wird und umgekehrt.

Weiterhin sollten die axial den Stirnflächen des Werkzeugkörpers jeweils am nächsten liegenden Enden der aktiven Hauptschneidkanten mit den Nebenschneidkanten der im Eckbereich zwischen Mantel und Stirnfläche angeordneten Schneideinsätze überlappen. Schließlich können die Nebenschneidkanten dabei noch in radialer Richtung etwas weiter vorstehen als die Hauptschneidkanten der auf dem Mantel angeordneten Schneideinsätze. Mit einer solchen Anordnung können die Nokken von Nockenwellen in einem einzigen Arbeitsgang mit dem richtigen Profil gefräst werden, d.h. mit einem Profil einer Scheibe, deren Kanten gefast sind.

Bei einer besonderen Ausführuncsform der vorliegenden Erfindung ist an mindestens einem Teil der Sitzflächen des Werkzeuggrundkörpe s eines Fräswerkzeuges ein vorspringender Nocken vorgesehen, der in eine entsprechende Aussparung eines in dem Sitz bzw. der Aufnahme des Werkzeuggrundkörpers aufgenommenen Schneideinsatzes eingreift. Zweckmäßigerweise wird ein solcher Nocken in der Weise ausgebildet, daß er möglichst paßgenau in die entsprechende Aussparung des Schneideinsatzes eingreift, zumindest aber mit einer seiner Umfangsflächen an einer Begrenzungsfläche der Aussparung anliegt, um den Schneideinsatz gegen eine seitliche Verschiebung in mindestens einer Richtung gegenüber dem Werkzeugkörper zu sichern. Durch Festziehen einer Spannschraube oder einer anderen Klemmeinrichtung kann dann der Schneideinsatz sowohl gegen äußere seitliche Sitzflächen als auch gegen mindestens eine der Nockenflächen gedrückt werden und man erhält so mehrere voneinander entfernte Anlagepunkte, welche den Schneideinsatz positionsgenau am Werkzeugkörper fixieren. Gleichzeitig kann man dabei auf einen Teil der ansonsten für eine genaue Positionierung vorzusehenden Sitzflächen entlang des äußeren Umfanges des Schneideinsatzes verzichten, gewinnt also am Werkzeugkörper mehr Platz für eine möglicherweise dichtere Anordnung benachbarter Schneideinsätze.

Es versteht sich, daß diese Ausgestaltung einer Sitzfläche mit einem Nocken zur Fixierung bzw. Positionierung eines Schneideinsatzes an einem Werkzeugkörper auch allgemeiner verwendet werden kann und nicht auf die Verwendung mit den schräg angestellten Schneidkanten bei einem Fräswerkzeug gemäß der vorliegenden Erfindung beschränkt ist.

Im vorliegenden Fall hat in der dargestellten Ausführungsform der vorstehende Nocken einen in etwa trapezförmigen Querschnitt, der im wesentlichen passend auf den trapezförmigen Querschnitt der in den Schneideinsätzen vorgesehenen Aussparungen abgestimmt ist. Es können auch mehrere kurze Nockenabschnitte vorgesehen sein, die an verschiedenen Positionen in eine entsprechend länger ausgebildete Aussparung eines Schneideinsatzes eingreifen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- **Figur 1**: eine perspektivische Ansicht einer schematisch dargestellten Ausführungsform eines erfindungsgemäßen Schneideinsatzes,
- **Figur 2**: verschiedene Ansichten und Varianten des in Figur 1 dargestellten Schneideinsatzes,
- **Figur 3**: verschiedene Varianten von Längsschnitten durch Schneideinsätze, wie sie in den Figuren 1 und 2 dargestellt sind,
- **Figur 4**: verschiedene Ansichten von Ausschnitten aus einem Fräswerkzeug mit daran angeordneten Schneideinsätzen sowie das sich daraus ergebende Schneidprofil und
- **Figur 5**: die Anordnung und Fixierung der erfindungsgemäßen Schneideinsätze an einem Werkzeuggrundkörper.
- **Figur 6**: eine perspektivische Ansicht einer realistisch wiedergegebenen ersten Ausführungsform eines erfindungsgemäßen Schneideinsatzes, und
- **Figur 7**: eine perspektivische Ansicht einer realistisch wiedergegebenen Ausführungsform eines erfindungsgemäßen Schneideinsatzes,

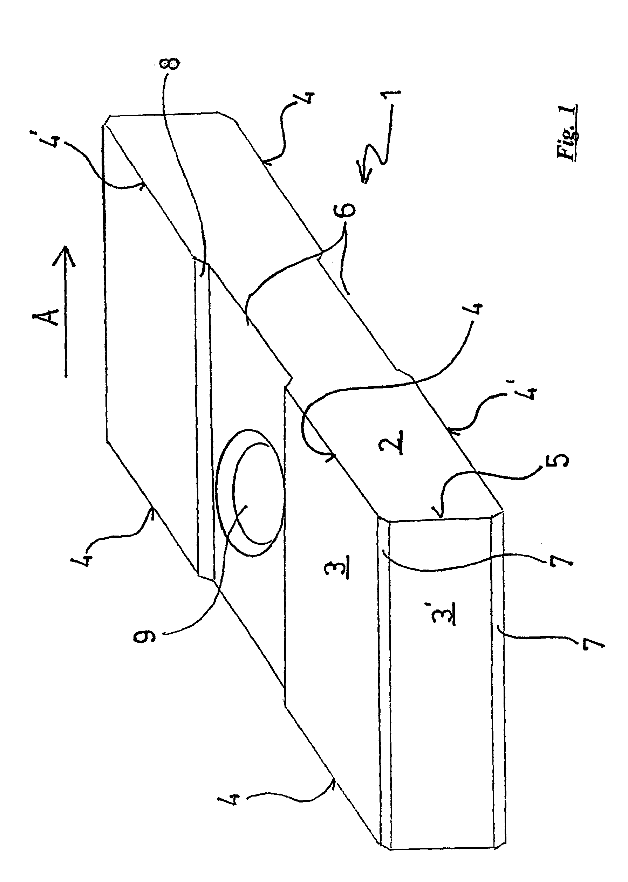

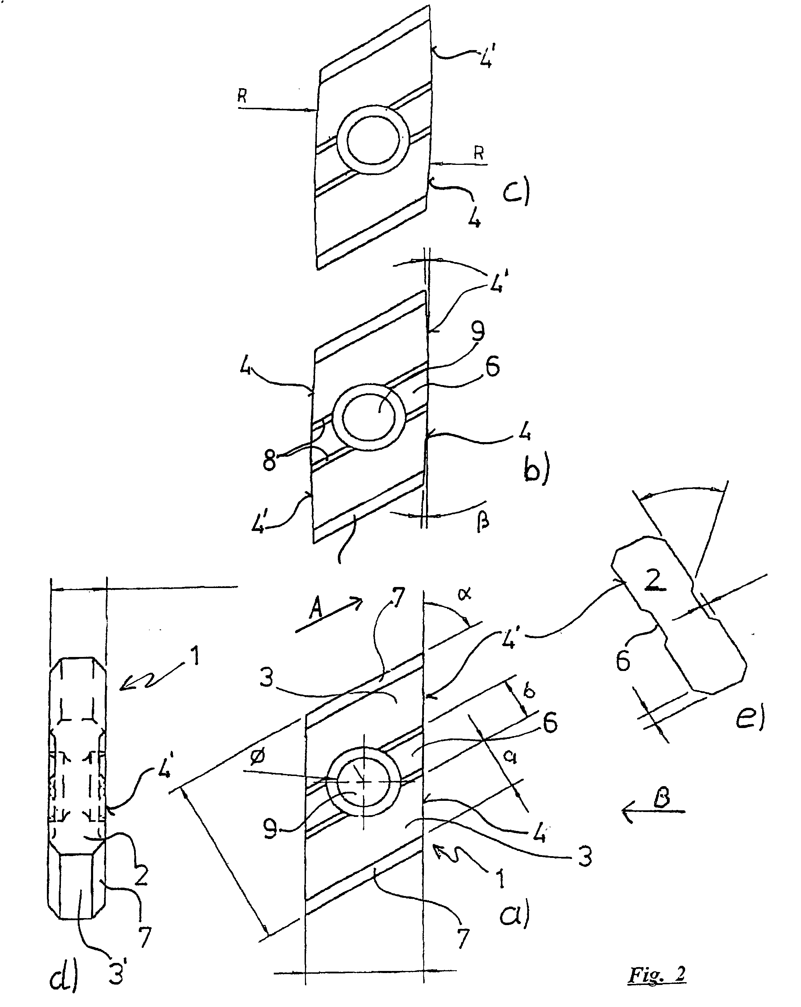

In Figur 1 erkennt man einen insgesamt mit 1 bezeichneten Schneideinsatz in Form eines Parallelepipeds mit zwei parallelen oberen und unteren Flächen, die Hauptfreiflächen 3 bilden, zwei vorderen und hinteren Flächen, die Spanflächen 2 definieren und schließlich noch zwei rechten und linken Flächen 3', die Nebenfreiflächen zu den Nebenschneidkanten 5 bilden. Während die Hauptschneidkanten und die Nebenschneidkanten 5 im wesentlichen rechtwinklig zueinander verlaufen, verlaufen die äußeren Randstrukturen 7 oder auch die Nebenfreiflächen 3' nicht rechtwinklig zu den Hauptschneidkanten. Vielmehr ist der Schneideinsatz in einer Draufsicht auf die Freiflächen 3 im wesentlichen zu einer Parallelogrammform verzerrt, wie man deutlich in den Figuren 2, 4 und 5 erkennen kann. Dabei ist aber Figur 1 nur eine schematische Wiedergabe, die die tatsächlichen Proportionen nicht unbedingt exakt wiedergibt.

In Figur 1 sieht man noch, daß der Schneideinsatz unterbrochene Hauptschneidkanten 4, 4' hat, wobei die Länge der Unterbrechung 6 etwas geringer ist als die Länge der Hauptschneidkantenabschnitte 4, 4' und wobei weitere Hauptschneidkanten abschnitte, 4, 4' an den auf der rückwärtigen, nicht sichtbaren Seite des Schneideinsatzes anschließenden Spanflächen vorgesehen sind und außerdem auch an der sichtbaren Vorderseite Schneidkanten sowohl entlang des oberen Randes der Spanfläche 2 als auch entlang des unteren Randes der Spanfläche 2 vorgesehen sind. Insgesamt sind an dem Schneideinsatz gemäß Figur 1 also vier Hauptschneidkanten vorgesehen, die jeweils aus zwei Schneidkantenabschnitten 4, 4' bestehen. Die Enden der einzelnen Hauptschneidkantenabschnitte 4, 4' sind jeweils unter ca. 45° abgewinkelt und gehen an den äußeren Enden des Schneideinsatzes in Nebenschneidkanten 5 über. An die Abwinkelungen der Hauptschneidkantenabschnitte 4, 4' schließen sich entsprechende Fasen 7 bzw. 8 der Freiflächen 3 an. Diese Fasen 7 und 8 bzw. deren Kanten und damit die Begrenzungen der einzelnen Freiflächenabschnitte 3 verlaufen parallel zu dem Pfeil A, welcher die Schneidrichtung des Schneideinsatzes 1 definiert. Im Zentrum des Schneideinsatzes ist noch eine Befestigungsbohrung 9 vorgesehen, die hier nur schematisch angedeutet ist und die im übrigen auch bis in die an die Schneidkantenabschnitte 4, 4' anschließenden Hauptfreiflächen 3 hineinreichen kann.

In Figur 2 erkennt man in den Teilbildern 2a, 2d und 2e unterschiedliche Ansichten des in Figur 1 dargestellten Schneideinsatzes. Figur 2a entspricht dabei einer vertikalen Draufsicht auf die Hauptfreiflächen 3, wobei hier die Befestigungsbohrung 9 etwas größer dargestellt ist als in Figur 1. also bis in die Hauptfreiflächen 3 hineinragt. Figur 2d entspricht einer Ansicht auf den in Figur 2a dargestellten Schneideinsatz entlang des Pfeiles B, und Figur 2e entspricht schließlich einer Ansicht auf den in Figur 2a dargestellten Schneideinsatz in Richtung bzw. entgegengesetzt der Richtung des Pfeiles A, der wiederum die Schnittrichtung angibt. Wie man sieht, hat in dieser Schnittrichtung der Schneideinsatz 1 grob angenähert das Profil einer Ziffer 8.

Die Figuren 2b und 2c zeigen geringfügig abgeänderte Varianten des in Figur 2a erkennbaren Schneideinsatzes, indem in Figur 2b die beiden Hauptschneidkantenabschnitte 4, 4' gegeneinander geneigt sind und damit gegenüber einem symmetrisch angeordneten vorderen Abschnitt der Unterbrechung 6 um einen Winkel von plus bzw. minus β geneigt sind, der in der Größenordnung von 1 bis 5° liegt. Dadurch schließen die beiden Schneidkantenabschnitten einen Winkel von maximal 10° miteinander an. in Figur 2c ist anstelle der Abwinkelung der beiden Schneidkantenabschnitte 4, 4' eine gleichmäßige Krümmung des Schneidkantenverlaufs 4, 4' vorgesehen, wobei der Krümmungsradius typischerweise in einer Größenordnung zwischen 100 und 1000 mm liegen sollte, so daß die beiden voneinander entfernt gelegenen Enden der Schneidkantenabschnitte 4, 4' Tangenten haben, die einen Winkel von maximal 10°, vorzugsweise in der Größenordnung von 1 bis 5°, miteinander einschließen. Dabei hängt der zu wählende Krümmungsradius von dem Durchmesser ab, in welchem der betreffende Schneideinsatz an dem Fräswerkzeug, gemessen von der Achse desselben, angeordnet ist, sowie von dem Neigungswinkel der Schneidkante gegenüber der Schneidrichtung oder dem hierzu komplementären Neigungswinkel gegenüber der Achse des Fräswerkzeuges. Idealerweise sollte der Krümmungsradius so gewählt sein, daß die Schneidkantenabschnitte 4, 4' über ihre gesamte Länge hinweg einen konstanten radialen Abstand von der Achse des Fräswerkzeuges haben, also auf einer gedachten Zylinderfläche um die Achse des Werkzeugkörpers liegen, so daß eine entsprechend konstante Schnittiefe beim Fräsen erzielt wird. Für eine Grobbearbeitung kann allerdings ebenso gut auch der Einsatz gemäß Figur 2a verwendet werden, wobei die Verwendung des Einsatzes gemäß Figur 2b eine Zwischenstufe in der Bearbeitungsgenauigkeit bildet.

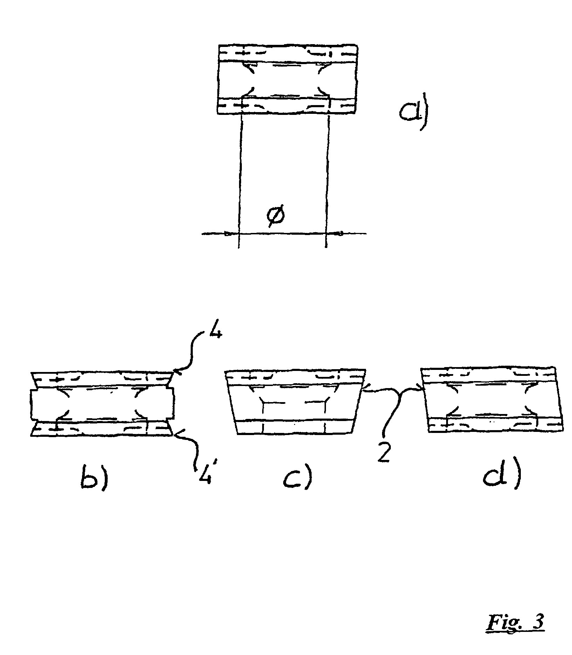

In Figur 3 erkennt man verschiedene Schnitt- bzw. Seitenansichten der in Figur 2, insbesondere in Figur 2a dargestellten Schneideinsätze, mit einer Blickrichtung von unten nach oben, d.h. senkrecht zu dem Pfeil B in Figur 2. Dabei entspricht Figur 3a der Form des in Figur 1 dargestellten Schneideinsatzes, bei welchen die Spanflächen 2 senkrecht zu den Freiflächen verlaufen, so daß sich zumindest beim Fräsen ein negativer Spanwinkel ergibt. Die übrigen in den Figuren 3b bis d dargestellten Querschnittformen ermöglichen ein Arbeiten mit einem positiven Spanwinkel. Hierzu sind im Ausführungsbeispiel gemäß Figur 3b angrenzend an die Hauptschneidkanten 4, 4' Vertiefungen in die Spanfläche 2 eingearbeitet, während in den Ausführungsbeispielen gemäß Figur 3c und 3d der Winkel zwischen Spanfläche und Freifläche verkleinert wurde, wodurch allerdings auch die Zahl der zur Verfügung stehenden Hauptschneidkanten reduziert wird, da in beiden Fällen statt vier Schneidkanten nur zwei (positive Schneidkanten) zur Verfügung stehen. Dabei ist die Ausführungsform gemäß Figur 3c noch insoweit zu bevorzugen, als sich nach einem Wenden des Schneideinsatzes dieselbe Orientierung für die diagonal gegenüberliegende Schneidkante ergibt, während sich im Falle der Ausführung gemäß Figur 3c diagonal gegenüberliegend jeweils eine spiegelbildliche Orientierung des Schneidkantenverlaufs ergibt. Mit anderen Worten, die Neigung der Schneidkante gegenüber der Achse eines Fräswerkzeuges wechselt beim Wenden des Schneideinsatzes von einer Schneidkante zur anderen das Vorzeichen. Dies ist jedoch auch der Fall bei den diagonal gegenüberliegenden Hauptschneidkanten der Schneideinsätze mit insgesamt vier Hauptschneidkanten. Für die Verwendung derartiger Schneideinsätze ist es daher zweckmäßig, wenn zwei verschiedene Typen von Fräswerkzeugen verwendet werden, die sich lediglich durch die Richtung der Neigung der Aufnahmetaschen bzw. der darin aufgenommenen Schneideinsätze entlang des Umfanges des Fräswerkzeuges umgekehrt ist. Auch dies ist insbesondere für Nockenwellenfräser zweckmäßig, weil bei Nockenwellenfräsern ohnehin im allgemeinen mehrere entsprechende Scheibenfräser gleichzeitig mit einer Nockenwelle in Eingriff treten, so daß diese Scheibenfräser jeweils paarweise einen Fräser des einen und einen des anderen Typs aufweisen sollten, um die Schneideinsätze optimal ausnutzen zu können, indem sie bei einem Wechsel der Hauptschneidkanten zwischen den beiden Fräsern ausgetauscht werden, sofern eine Hauptschneidkante mit der richtigen Symmetrie für den vorherigen Fräser nicht mehr zur Verfügung steht.

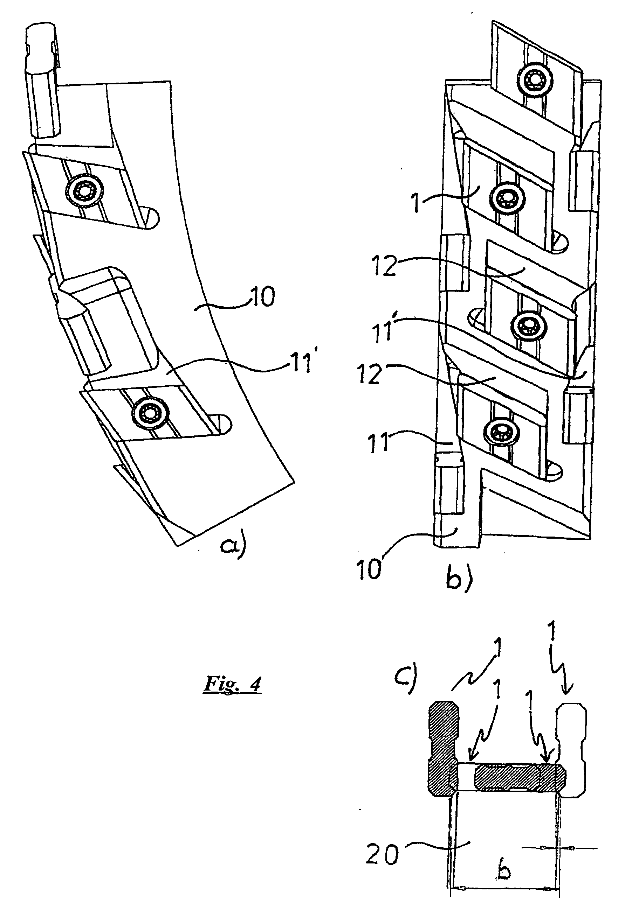

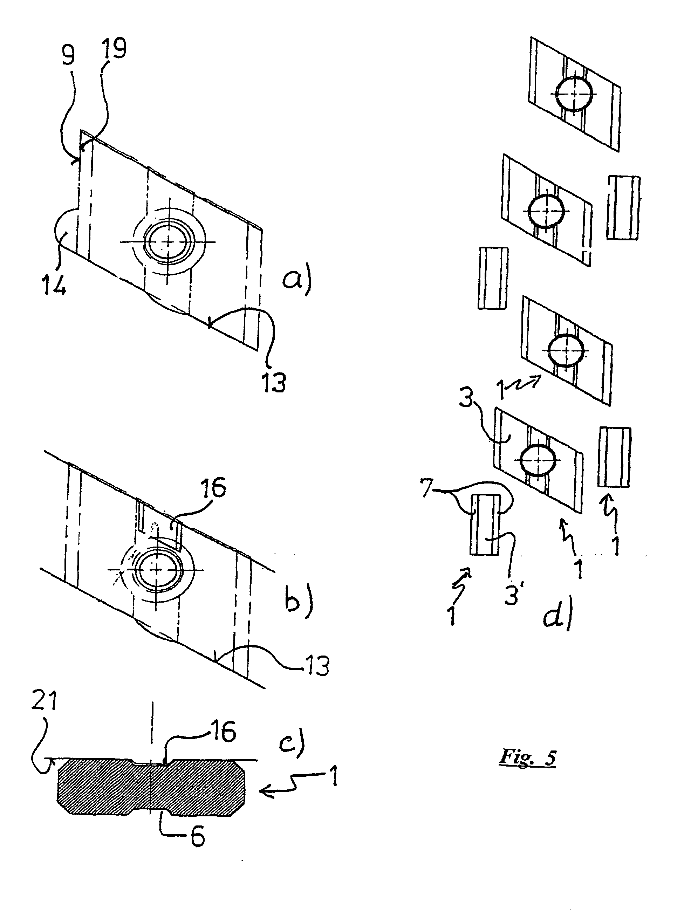

Besser verständlich wird dies noch anhand der Beschreibung der Figuren 4 und 5, welche ausschnittweise eine Fräser bzw. die Anordnung der Schneideinsätze an einem solchen Fräser darstellen.

Man erkennt in Figur 4a einen Umfangsabschnitt eines im wesentlichen kreisscheibenförmigen Werkzeugkörpers 10, der Aufnahmetaschen 11' für Schneideinsätze 1 aufweist, die entlang des Eckbereiches zwischen einer Stirnfläche und der Mantelfläche des Werkzeugkörpers 10 angeordnet sind. Figur 4b zeigt eine Draufsicht auf die Mantelfläche. Man erkennt dabei, daß in beiden Eckbereichen am Übergang der Stirnseiten zu der Mantelfläche des Fräsers 10 Aufnahmetaschen 11 bzw. 11' im Wechsel angeordnet sind, in denen je ein Schneideinsatz 1 aufgenommen ist. Auch entlang der Mantelfläche sind Aufnahmetaschen 12 bzw. 12' vorgesehen, die jeweils einen Sitz für die Schneidplatten 1 definieren, wobei sich die Aufnahmetaschen 12 und 12' in Umfangsrichtung abwechseln und sich nur durch ihre axiale Position unterscheiden. Die Schneideinsätze 1 in den Aufnahmetaschen 12 sind gegenüber den Schneideinsätzen 1 in den Aufnahmetaschen 12' etwas nach links versetzt, und zwar so, daß die Unterbrechungen zwischen den Schneidkanten der einen Gruppe von Schneideinsätzen durch Schneidkanten der anderen Gruppe von Schneideinsätzen jeweils abgedeckt werden. Außerdem überlappen die Schneidkanten der in den Aufnahmetaschen 12 bzw.12' angeordneten Schneideinsätze auch jeweils mit einer der Gruppe von Schneideinsätzen, die in den Aufnahmetaschen 11 bzw. 11' angeordnet sind. In einer tangentialen Ansicht in Umfangsrichtung, in der die aufeinanderfolgenden Schneideinsätze in derselben Ebene dargestellt sind, erkennt man das mit dieser Anordnung gebildete Profil 20, wie es in Figur 4c dargestellt ist. Um die einzelnen Schneideinsätze besser voneinander unterscheiden zu können, ist dabei der linke, vertikal angeordnete Schneideinsatz und der rechte horizontale Schneideinsatz jeweils schraffiert gezeichnet. Wie man sieht, schneiden die in den Taschen 11, 11' angeordneten Schneideinsätze mit ihren Nebenschneidkanten 5, die in radialer Richtung etwas weiter vorstehen als die Hauptschneidkanten der horizontal angeordneten Schneideinsätze 1, die den mittleren Teil eines Profils bzw. Nokkens 20 schneiden. Dadurch treten die Fasenschneidkanten am Übergang zwischen den Nebenschneidkanten 5 und den Hauptschneidkanten 4 mit den Kanten des Profils 20 in Eingriff, so daß insgesamt ein Nocken- oder Scheibenprofil mit abgefasten Kanten erzeugt wird.

Figur 5 veranschaulicht in den Teilbildern 5a, 5b und 5c verschiedene Befestigungsvarianten der Schneideinsätze 1 und Figur 5d zeigt nochmals in einer Abwicklung die genaue Anordnung der Schneideinsätze 1 entsprechend der Darstellung in Figur 4b. In Figur 5a ist eine Aufnahmetasche erkennbar, die durch zueinander abgewinkelte Flächen 13 und 19 einen Sitz für die Wendeschneidplatte 1 definiert, wobei am Übergang der Flächen 13, 19 ein Freistich 14 erkennbar ist. An der Fläche 13 liegt eine Spanfläche des Schneideinsatzes 1 an, und an der Fläche 9 liegt eine Nebenfreifläche 5 an. In Figur 5b und c ist eine Variante dargestellt, in der man nur eine Anlagefläche 13 erkennt, wobei anstelle einer weiteren Anlagefläche 19 ein Nocken 16 am Grund des Plattensitzes erkennbar ist, der in die durch die Aussparung 6 gebildete Vertiefung der Freifläche 3 eingreift und dadurch einen eindeutigen Plattensitz definiert. Der Nocken 16 hat einen trapezförmigen Querschnitt, der genau dem trapezförmigen Querschnitt der Aussparungen 6 der Schneideinsätze 1 angepaßt ist. In der Draufsicht erscheint er ebenfalls im wesentlichen parallelogrammförmigen mit denselben Parallelogrammwinkeln wie der Schneideinsatz, und seine seitlichen Anlagenflächen, die den Schneideinsatz 1 bezüglich des Werkzeugkörpers 10 in axialer Richtung eindeutig fixieren, verlaufen parallel zur Umfangsrichtung bzw. zur Schnittrichtung.

Es versteht sich, daß auch auf der anderen Seite der Befestigungsbohrung noch zusätzlich ein entsprechender Nocken 16 vorgesehen werden könnte. um den Schneideinsatz an zwei voneinander entfernt gelegenen Punkten in der erwähnten axialen Richtung zu fixieren. Allerdings wird diese Funktion ohnehin auch durch die Anlagefläche 13 erfüllt, die den Schneideinsatz 1 in Umfangsrichtung und damit gegen die an den Schneidkanten angreifenden Schneidkräfte abstützt.

In Figur 5d wird deutlich, wie die einzelnen Platten 1 relativ zueinander versetzt sind und dadurch insgesamt das in Figur 4c dargestellte Profil definieren.

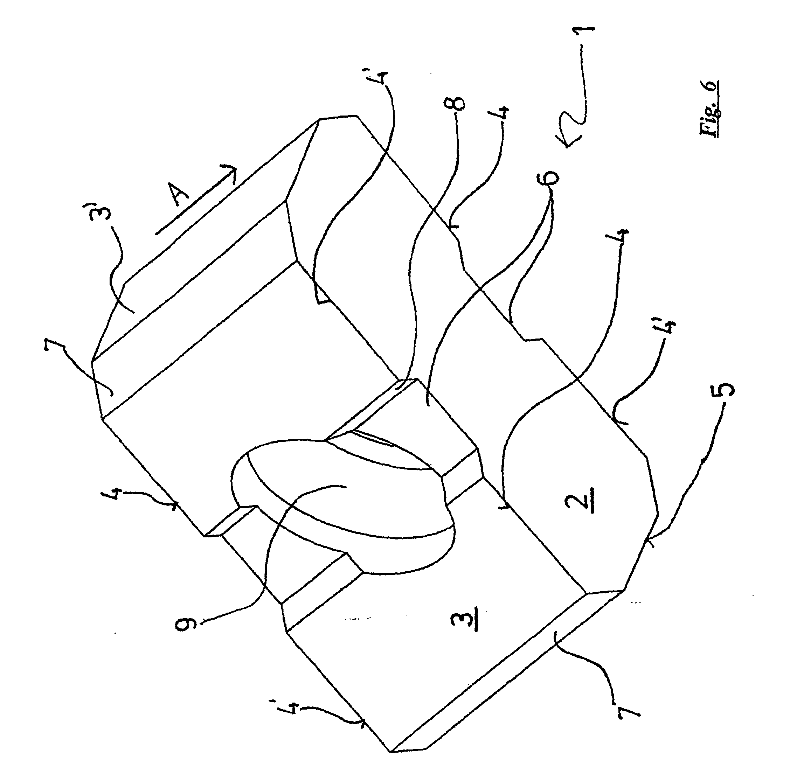

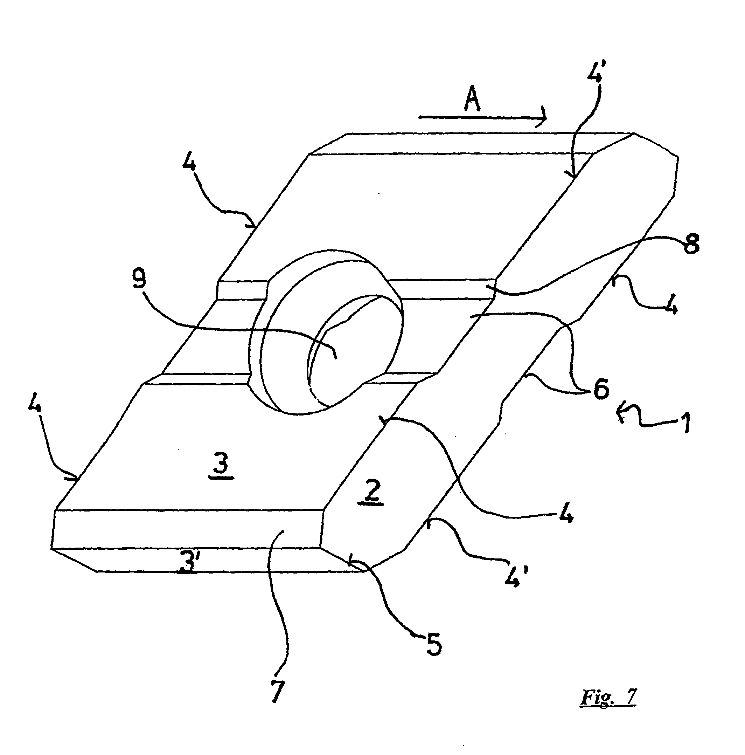

In den Figuren 6 und 7 sind zwei Ausführungsformen der vorliegenden Erfindung in einer weitgehend realistischen perspektivischen Darstellung wiedergegeben. Wie man anhand eines Vergleiches mit Figur 1 leicht nachvollziehen kann, sind sämtliche in der Beschreibung zu Figur 1 definierten Flächen, Kanten, Aussparungen etc. in gleicher Weise auch bei den in Figur 6 und 7 dargestellten Ausführungsformen vorhanden. Lediglich die Proportionen der einzelnen Elemente zueinander verhalten sich etwas anders als bei der Darstellung gemäß Figur 1.

## Patentansprüche

1. Schneideinsatz für die spanende Metallbearbeitung und für den tangentialen und/oder radialen Einbau an einem Scheibenfräser, insbesondere zum Fräsen von Nockenwellen, mit mindestens einer Schneidkante (4, 4'), die durch den Schnitt einer Spanfläche (2) mit einer Freifläche (3) gebildet wird, **dadurch gekennzeichnet, daß** der Schneideinsatz in der Draufsicht auf die Freifläche (3) die Form eines nicht rechtwinkligen Parallelogramms hat, wobei die Hauptschneidkante (4, 4') relativ zur Schneidrichtung unter einem von 90° abweichenden Winkel verläuft und wobei die Schneidrichtung im wesentlichen durch Strukturen (7, 8) definiert wird, die auf der Freifläche (3) vorgesehen sind.

2. Schneideinsatz nach Anspruch 1, **dadurch gekennzeichnet, daß** der Winkel zwischen der Hauptschneidkante (4, 4') und der Schneidrichtung zwischen 40 und 85°, insbesondere zwischen 50 und 75° und bevorzugt zwischen 55 und 65° liegt.

3. Schneideinsatz nach einem der Ansprüche 1 oder 2, **dadurch gekennzeichnet, daß** die Hauptschneidkanten (4, 4') jeweils unterbrochen sind und aus mindestens einem ersten Schneidkantenabschnitt (4) und einen zweiten Schneidkantenabschnitt (4') bestehen.

4. Schneideinsatz nach Anspruch 3, **dadurch gekennzeichnet, daß** der lichte Abstand zwischen den Schneidkantenabschnitten (4, 4') der Hauptschneidkante kürzer ist als die Länge je eines der vorzugsweise gleich langen Schneidkantenabschnitte (4, 4').

5. Schneideinsatz nach Anspruch 4, **dadurch gekennzeichnet, daß** der lichte Abstand zwischen den Schneidkantenabschnitten (4, 4') zwischen 70 und 95%, vorzugsweise zwischen 75 und 90% der Länge der Schneidkantenabschnitte (4, 4') beträgt.

6. Schneideinsatz nach einem der Ansprüche 1 bis 5, **dadurch gekennzeichnet, daß** die jeweiligen Enden der Schneidkantenabschnitte (4, 4') abgewinkelt sind, vorzugsweise um ca. 45°.

7. Schneideinsatz nach einem der Ansprüche 1 bis 6, **dadurch gekennzeichnet, daß** Schneidkanten (4, 4') jeweils auf voneinander abgewandten Spanflächen (2) des Schneideinsatzes vorgesehen sind.

8. Schneideinsatz nach einem der Ansprüche 1 bis 7, **dadurch gekennzeichnet, daß** Schneidkanten auf derselben Seite einer Spanfläche (2), jedoch mit voneinander abgewandten Freiflächen vorgesehen sind.

9. Schneideinsatz nach einem der Ansprüche 1 bis 8, **dadurch gekennzeichnet, daß** Nebenschneidkanten (5) vorgesehen sind, die an die äußeren Enden der Hauptschneidkanten , bzw. an deren abgewinkelte Endabschnitte anschließen und im wesentlichen rechtwinklig zu den Hauptschneidkanten verlaufen.

10. Schneideinsatz nach einem der Ansprüche 1 bis 9, **dadurch gekennzeichnet, daß** die Hauptschneidkanten leicht gekrümmt bzw. unter einem kleinen Winkel gegeneinander abgewinkelt verlaufen.

11. Schneideinsatz nach Anspruch 10, **dadurch gekennzeichnet, daß** der Krümmungsradius der Schneidkanten größer als 300 mm und kleiner als 2000 mm ist

12. Schneideinsatz nach Anspruch 10 oder 11, **dadurch gekennzeichnet, daß** die voneinander entfernt gelegenen Enden der Hauptschneidkanten bzw. Hauptschneidkantenabschnitte (4, 4') einen Winkel miteinander einschließen, der größer als 1° und kleiner als 10° ist.

13. Fräswerkzeug zur spanenden Bearbeitung eines metallischen Werkstückes, bestehend aus einem im wesentlichen zylindrischen bzw. kreisscheibenförmigen Werkzeugkörper mit mehreren Aufnahmetaschen (11, 11'; 12, 12') für Schneideinsätze (1), die entlang des Umfanges des Werkzeugkörpers (10) verteilt sind, wobei mindestens ein Teil der Aufnahmetaschen (11, 11'; 12, 12') derart angeordnet ist, daß die aktiven Schneidkariten der darin aufgenommenen Schneideinsätze (1) relativ zur Achse des Werkzeugkörpers (10) in Umfangsrichtung geneigt verlaufen, **dadurch gekennzeichnet, daß** die Aufnahmetaschen für die Aufnahme von Schneideinsätzen nach einem der Ansprüche 1 bis 12 vorgesehen sind und derart angeordnet sind, daß die aktiven Schneidkanten der darin aufgenommenen Schneideinsätze (1) relativ zur Achse des Werkzeugkörpers (10) um mindestens 10 bis 40° geneigt verlaufen und so, daß Strukturen auf den Freiflächen der Schneideinsätze im wesentlichen in Schneidrichtung verlaufen.

14. Fräswerkzeug nach Anspruch 13, **dadurch gekennzeichnet, daß** der Neigungswinkel der Schneidkanten relativ zur Achse des Werkzeugkörpers zwischen 25 und 35° liegt.

15. Fräswerkzeug nach Anspruch 13 oder 14, **dadurch gekennzeichnet, daß** alle aktiven Hauptschneidkanten gegenüber der Achse des Werkzeugkörpers (10) geneigt sind.

16. Fräswerkzeug nach Anspruch 15, **dadurch gekennzeichnet, daß** die Hauptschneidkanten alle in derselben Richtung gegenüber der Achse des Werkzeugkörpers (10) geneigt sind.

17. Fräswerkzeug nach einem der Ansprüche 13 bis 16, **dadurch gekennzeichnet, daß** die aktiven Nebenschneidkanten (5) von Werkzeugeinsätzen (1) gegenüber der Achse des Werkzeugkörpers (10) in Umfangsrichtung geneigt sind.

18. Fräswerkzeug nach Anspruch 17, **dadurch gekennzeichnet, daß** die an verschiedenen Ekken zwischen Umfang und Stimflächen des Werkzeugkörpers (10) angeordneten Schneideinsätze in entgegengesetzten Richtungen geneigte Nebenschneidkanten aufweisen.

19. Fräswerkzeug nach einem der Ansprüche 13 bis 18, **dadurch gekennzeichnet, daß** ein Teil der Schneideinsätze in den Eckbereichen zwischen dem Mantel und den beiden Stirnflächen des im wesentlichen zylindrischen Werkzeugkörpers (10) angeordnet ist und ein weiterer Teil auf dem Umfang bzw. der Mantelfläche des zylindrischen Werkzeugkörpers (10) angeordnet ist

20. Fräswerkzeug nach Anspruch 19, **dadurch gekennzeichnet, daß** die Schneideinsätze in vier verschiedenen, durch ihre Position gekennzeichneten Gruppen an dem Werkzeugkörper (10) angeordnet sind, wobei die Schneideinsätze einer ersten und einer zweiten Gruppe jeweils in dem Eckbereich zwischen dem Mantel und den beiden Stirnflächen des zylindrischen Werkzeugkörpers angeordnet sind, während die beiden anderen Gruppen in axialer Richtung gegeneinander verschoben entlang des Umfanges bzw. Mantels des zylindrischen Werkzeugkörpers (10) verteilt sind.

21. Fräswerkzeug nach Anspruch 20, **dadurch gekennzeichnet, daß** die Schneideinsätze mit ihren Schneidkanten (4, 4', 5) in der Weise überlappend angeordnet sind, daß die eine Gruppe der auf dem Mantel des Werkzeugkörpers (10) angeordneten Schneideinsätze (1) gegenüber der anderen Gruppe der auf dem Mantel angeordneten Schneideinsätze (1) derart angeordnet ist, daß je einer der Hauptschneidkantenabschnitte (4, 4') der einen Gruppe den Unterbrechungsbereich (6) zwischen den Hauptschneidkantenabschnitten (4, 4') der jeweils anderen Gruppe überdeckt und wobei die den Stirnflächen des Werkzeugkörpers (10) jeweils am nächsten liegende Enden der Hauptschneidkanten je einer der Gruppen mit den Nebenschneidkanten (5) der in den Eckbereichen angeordneten Schneideinsätze (1) überlappen.

22. Fräswerkzeug nach einem der Ansprüche 13 bis 21, **dadurch gekennzeichnet, daß** der Werkzeugkörper Sitzflächen (21) mit einem vorstehenden Nocken (16) aufweist, der bei Aufnahme eines Schneideinsatzes (1) in eine passende Aussparung (6) desselben eingreift.

23. Fräswerkzeug nach Anspruch 22, **dadurch gekennzeichnet, daß** Nocken (16) und Aussparung (6) so aufeinander abgestimmt sind, daß der Nocken (16) den Schneideinsatz (1) in mindestens einer Richtung gegen eine Verschiebung gegenüber der Sitzfläche (21) sichert.

24. Fräswerkzeug nach Anspruch 23, **dadurch gekennzeichnet, daß** die Sitzfläche (21) entlang der Umfangsfläche des Werkzeugkörpers (10) angeordnet ist, wobei der Nocken (16) derart angeordnet ist, daß er den Schneideinsatz (1) in axialer Richtung des im wesentlichen zylindrischen Werkzeugkörpers (10) fixiert.

## Claims

1. A cutting insert for machine-cutting metalworking and for tangential and/or radial installation on a disk milling cutter, particularly for milling camshafts, having at least one cutting edge (4, 4') which is formed by the cut of a top face (2) with a clearance face (3), **characterised in that** in the plan view onto the clearance face (3) the cutting insert takes the shape of a non-right-angled parallelogram, wherein the main cutting edge (3, 4) extends in relation to the cutting direction at an angle deviating from 90°, and wherein the cutting direction is defined substantially by structures (7, 8) which are provided on the clearance face (3).

2. A cutting insert according to Claim 1, **characterised in that** the angle between the main cutting edge (4, 4') and the cutting direction is between 40 and 85°, in particular between 50 and 75°, and preferably between 55 and 65°.

3. A cutting insert according to one of Claims 1 or 2, **characterised in that** each of the main cutting edges (4, 4') is interrupted and consists of at least a first cutting edge section (4) and a second cutting edge section (4').

4. A cutting insert according to Claim 3, **characterised in that** the internal distance between the cutting edge sections (4, 4') of the main cutting edge is shorter than the length of each one of the cutting edge sections (4, 4') of preferably equal length.

5. A cutting insert according to Claim 4, **characterised in that** the internal distance between the cutting edge sections (4, 4') is between 70 and 95%, preferably between 75 and 90%, of the length of the cutting edge sections (4, 4').

6. A cutting insert according to one of Claims 1 to 5, **characterised in that** the respective ends of the cutting edge sections (4, 4') are bevelled, preferably by ca. 45°.

7. A cutting insert according to one of Claims 1 to 6, **characterised in that** cutting edges (4, 4') are respectively provided on mutually remote top faces (2) of the cutting insert.

8. A cutting insert according to one of Claims 1 to 7, **characterised in that** cutting edges are provided on the same side of a top face (2), but are provided with mutually remote clearance faces.

9. A cutting insert according to one of Claims 1 to 8, **characterised in that** secondary cutting edges (5) are provided which are joined to the outer ends of the main cutting edges, or to the bevelled end sections thereof, and which extend substantially at right angles to the main cutting edges.

10. A cutting insert according to one of Claims 1 to 9, **characterised in that** the main cutting edges are slightly curved, or extend so that they are bevelled at a slight angle relative to each other.

11. A cutting insert according to Claim 10, **characterised in that** the radius of curvature of the cutting edges is greater than 300 mm and less than 2000 mm.

12. A cutting insert according to Claim 10 or Claim 11, **characterised in that** the mutually distanced ends of the main cutting edges, or main cutting edge sections (4, 4'), enclose an angle which is greater than 1° and less than 10°.

13. A milling tool for the machine-cutting metalworking of a metal workpiece, consisting of a tool body which is substantially cylindrical or in the shape of a circular disk having a number of receiving pockets (11, 11'; 12, 12') for cutting inserts (1) which are distributed along the periphery of the tool body (10), wherein at least some of the receiving pockets (11, 11'; 12, 12') are arranged in such a way that the active cutting edges of the cutting inserts (1) received therein extend inclinedly in the peripheral direction in relation to the axis of the tool body (10), **characterised in that** the receiving pockets are provided for receiving cutting inserts according to one of Claims 1 to 12 and are arranged in such a way that the active cutting edges of the cutting inserts (1) received therein extend inclinedly in relation to the axis of the tool body (10) by at least 10 to 40° and in such a way that structures on the clearance faces of the cutting inserts extend substantially in the cutting direction.

14. A milling tool according to Claim 13, **characterised in that** the angle of inclination of the cutting edges relative to the axis of the tool body is between 25 and 35°.

15. A milling tool according to Claim 13 or Claim 14, **characterised in that** all active main cutting edges are inclined relative to the axis of the tool body (10).

16. A milling tool according to Claim 15, **characterised in that** the main cutting edges are all inclined in the same direction relative to the axis of the tool body (10).

17. A milling tool according to one of Claims 13 to 16, **characterised in that** the active secondary cutting edges (5) of tool inserts (1) are inclined in the peripheral direction relative to the axis of the tool body (10).

18. A milling tool according to Claim 17, **characterised in that** the cutting inserts arranged at various corners between the periphery and front surfaces of the tool body (10) have secondary cutting edges which are inclined in opposite directions.

19. A milling tool according to one of Claims 13 to 18, **characterised in that** some of the cutting inserts are arranged in the comer regions between the lateral surface and the two front surfaces of the substantially cylindrical tool body (10), and some further ones are arranged on the periphery or lateral surface of the cylindrical tool body (10).

20. A milling tool according to Claim 19, **characterised in that** the cutting inserts are arranged in four different groups on the tool body (10) **characterised by** their position, wherein the cutting inserts of a first group and of a second group are each arranged in the corner region between the lateral surface and the two front surfaces of the cylindrical tool body, whilst the two other groups are distributed in axially displaced relationship relative to each other along the periphery or lateral surface of the cylindrical tool body (10).

21. A milling tool according to Claim 20, **characterised in that** the cutting inserts are arranged with their cutting edges (4, 4', 5) overlapping in such a way that the one group of cutting inserts (1) arranged on the lateral surface of the tool body (10) is arranged in relation to the other group of cutting inserts (1) arranged on the lateral surface in such a way that each one of the main cutting edge sections (4, 4') of the one group overlaps the region of interruption (6) between the main cutting edge sections (4, 4') of the respective other group, and wherein in each one of the groups the ends of the main cutting edges which are disposed closest to the front surfaces of the tool body (10) overlap with the secondary cutting edges (5) of the cutting inserts (1) arranged in the corner regions.

22. A milling tool according to one of Claims 13 to 21, **characterised in that** the tool body has seats (21) with a projecting cam (16), which, upon receiving a cutting insert (1), engages into a fitting recess (6) of same.

23. A milling tool according to Claim 22, **characterised in that** the cams (16) and recess (6) are co-ordinated with one another in such a way that the cam (16) secures the cutting insert (1) in at least one direction from displacement out of the seat (21).

24. A milling tool according to Claim 23, **characterised in that** the seat (21) is arranged along the peripheral face of the tool body (10), wherein the cam (16) is arranged in such a way that it fixes the cutting insert (1) in the axial direction of the substantially cylindrical tool body (10).

## Revendications

1. Pastille de coupe pour l'usinage de métaux par enlèvement de copeaux et pour le montage tangentiel et/ou radial sur une fraiseuse à disque, en particulier en vue du fraisage d'arbres à came, comportant au moins une arête de coupe (4, 4') qui est formée par l'intersection d'une face d'attaque (2) avec une face de dépouille (3), **caractérisée en ce que** la pastille de coupe a la forme d'un parallélogramme non rectangulaire lorsque la face de dépouille est vue de dessus, l'arête de coupe principale (4, 4') s'étendant avec un angle s'écartant de 90° par rapport à la direction de coupe et la direction de coupe étant définie essentiellement par des structures (7, 8) qui sont prévues sur la surface de dépouille (3).

2. Pastille de coupe selon la revendication 1, **caractérisée en ce que** l'angle compris entre l'arête de coupe principale (4, 4') et la direction de coupe est compris entre 40° et 85°, en particulier entre 50° et 75° et de préférence entre 55° et 65°.

3. Pastille de coupe selon la revendication 1 ou 2, **caractérisée en ce que** les arêtes de coupe principales (4, 4') sont chacune discontinues et sont constituées d'au moins une première portion d'arête de coupe (4) et d'une deuxième portion d'arête de coupe (4').

4. Pastille de coupe selon la revendication 3, **caractérisée en ce que** la portion intérieure entre les portions d'arête de coupe (4, 4') de l'arête de coupe principale est plus courte que la longueur de chacune des portions d'arête de coupe (4, 4') avantageusement de même longueur.

5. Pastille de coupe selon la revendication 4, **caractérisée en ce que** la portion intérieure entre les portions d'arête de coupe (4, 4') est égale à une valeur comprise entre 70 et 95%, avantageusement entre 75 et 90% de la longueur des portions d'arête de coupe (4, 4').

6. Pastille de coupe selon l'une des revendications 1 à 5, **caractérisée en ce que** les extrémités respectives des portions d'arête de coupe (4, 4') sont pliées, avantageusement à 45° environ.

7. Pastille de coupe selon l'une des revendications 1 à 6, **caractérisée en ce que** des arêtes coupe (4, 4') sont prévues sur des faces d'attaque (2) opposées de la pastille de coupe.

8. Pastille de coupe selon l'une des revendications 1 à 7, **caractérisée en ce que** les arêtes de coupe sont prévues du même côté d'une face d'attaque (2), mais avec des faces de dépouilles opposées.

9. Pastille de coupe selon l'une des revendications 1 à 8, **caractérisée en ce qu'**il est prévu des arêtes de coupe secondaires (5) qui se raccordent aux extrémités extérieures des arêtes de coupe principale resp. aux portions d'extrémité pliées et s'étendent sensiblement à angle droit par rapport aux arêtes de coupe principales.

10. Pastille de coupe selon l'une des revendications 1 à 9, **caractérisée en ce que** les arêtes de coupe principales s'étendent en étant légèrement incurvées resp. en faisant un angle faible l'une par rapport à l'autre.

11. Pastille de coupe selon la revendication 10, **caractérisée en ce que** le rayon de courbure des arêtes de coupe est supérieur à 300 mm et inférieur à 2000 mm.

12. Pastille de coupe selon la revendication 10 ou 11, **caractérisée en ce que** les extrémités distantes des arêtes de coupe principales resp. des portions d'arête de coupe principale (4, 4') font entre elles un angle qui est supérieur à 1° et inférieur à 10°.

13. Fraise destiné à usiner une pièce métallique par enlèvement de copeaux, laquelle fraise se compose d'un corps d'outil sensiblement cylindrique resp. discoïdal comportant plusieurs logements (11, 11' ; 12, 12') pour pastilles de coupe (1) qui sont répartis le long de la périphérie du corps (10) de l'outil, au moins une partie des logements (11, 11'; 12, 12') étant disposée de telle sorte que les arêtes de coupe actives des pastilles de coupe (1) logées s'étendent de façon inclinée par rapport à l'axe du corps (10) de l'outil dans la direction périphérique, **caractérisée en ce que** les logements sont destinés à recevoir des pastilles de coupe selon l'une des revendications 1 à 12 et sont agencés de façon à ce que les arêtes de coupe actives des pastilles de coupe (1) logées à l'intérieur s'étendent par rapport à l'axe du corps (10) de l'outil avec une inclinaison d'au moins 10 à 40° et de telle sorte que des structures sur les faces de dépouille des pastilles de coupe s'étendent sensiblement dans la direction de coupe.

14. Fraise selon la revendication 13, **caractérisée en ce que** l'angle d'inclinaison des arêtes de coupe par rapport à l'axe du corps de l'outil est compris entre 25 et 35°.

15. Fraise selon la revendication 13 ou 14, **caractérisée en ce que** toutes les arêtes de coupe principales sont inclinées par rapport à l'axe du corps (10) de l'outil.

16. Fraise selon la revendication 15, **caractérisée en ce que** les arêtes de coupe principales sont toutes inclinées dans la même direction par rapport à l'axe du corps (10) de l'outil.

17. Fraise selon l'une des revendications 13 à 16, **caractérisée en ce que** les arêtes de coupe secondaires (5) de pastille d'outil (1) sont inclinées dans la direction périphérique par rapport à l'axe du corps (10) de l'outil.

18. Fraise selon la revendication 17, **caractérisée en ce que** les pastilles de coupe disposées en différents coins entre la périphérie et les faces frontales du corps (10) de l'outil comportent des arêtes de coupe secondaires inclinées dans des directions opposées.

19. Fraise selon l'une des revendications 13 à 18, **caractérisée en ce qu'**une partie des pastilles de coupe est agencée dans les régions de coin entre l'enveloppe et les deux faces frontales du corps (10) sensiblement cylindrique de l'outil et une autre partie est agencée sur la périphérie resp. la surface d'enveloppe du corps cylindrique (10) de l'outil.

20. Fraise selon la revendication 19, **caractérisée en ce que** les pastilles de coupe sont agencées au niveau du corps (10) de l'outil dans quatre groupes différents, **caractérisés par** leur position, les pastilles de coupe d'un premier groupe et d'un deuxième groupe sont agencées à chaque fois dans la région de coin entre l'enveloppe et les faces frontales du corps cylindrique de l'outil, tandis que les deux autres groupes sont répartis le long de la périphérie resp. de l'enveloppe du corps cylindrique (10) de l'outil en étant décalés l'un de l'autre dans une direction axiale.

21. Fraise selon la revendication 20, **caractérisée en ce que** les pastilles de coupe sont agencées avec leurs arêtes de coupe (4, 4', 5) de façon à se chevaucher de sorte que l'un des groupes de pastilles de coupe (1) agencées sur l'enveloppe du corps (10) de l'outil est agencé par rapport à l'autre groupe de pastilles de coupe (1), agencés sur l'enveloppe, de telle sorte que l'une des portions d'arête de coupe principale (4, 4') de l'un des groupes chevauche la région discontinue (6) entre les portions d'arête de coupe principale (4, 4') de l'autre groupe et les extrémités, les plus proches des faces frontales du corps (10) de l'outil, des arêtes de coupe principales de l'un des groupes chevauchent les arêtes de coupe secondaires (5) des pastilles de coupe (1) agencées dans les régions de coin.

22. Fraise selon l'une des revendications 13 à 21, **caractérisée en ce que** le corps de l'outil comporte des faces d'appui (21) dotées d'un ergot saillant (16) qui s'engage, lors du logement d'une pastille de coupe (1), dans un évidement approprié (6) de celle-ci.

23. Fraise selon la revendication 22, **caractérisée en ce que** l'ergot (16) et l'évidement (6) sont adaptés l'un à l'autre de telle sorte que l'ergot (16) garantit que la pastille de coupe (1) ne se déplace pas dans au moins une direction par rapport à la face d'appui (21).

24. Fraise selon la revendication 23, **caractérisée en ce que** la face d'appui (21) est agencée le long de la face périphérique du corps (10) de l'outil, l'ergot (16) étant agencé de façon à fixer la pastille de coupe (1) dans une direction axiale du corps (10) sensiblement cylindrique de l'outil.
